# EUROPÄISCHE PATENTSCHRIFT

(11) **EP 3 616 648 B1**
(45) Veröffentlichungstag und Bekanntmachung des Hinweises auf die Patenterteilung: **14.06.2023**
(21) Anmeldenummer: 18191571.1
(22) Anmeldetag: 29.08.2018
(51) Int. Cl.: G01J 3/46, A61C 13/08, A61C 13/083, A61C 19/10, A61C 13/00

(54) **VERFAHREN ZUM ERMITTELN EINES MISCHUNGSREZEPTS FÜR EINE DENTALKERAMIK MIT EINER GEWÜNSCHTEN FARBE**
METHOD FOR DETERMINING A MIXTURE RECIPE FOR A DENTAL CERAMIC WITH A DESIRED COLOUR
PROCÉDÉ DE DÉTERMINATION D'UNE RECETTE DE MÉLANGE POUR UNE CÉRAMIQUE DENTAIRE PRÉSENTANT UNE COULEUR DÉSIRÉE

(43) Veröffentlichungstag der Anmeldung: 04.03.2020
(73) Patentinhaber: Hein, Sascha, 76109 Freiburg Im Breisgau (DE)
(72) Erfinder: Hein, Sascha, 76109 Freiburg Im Breisgau (DE)
(74) Vertreter: Henkel & Partner mbB

(56) Entgegenhaltungen:
- JP-A- 2018 038 551
- US-A- 6 030 209
- US-A1- 2007 212 667
- Sascha Hein ET AL: "eLABor_aid: a new approach to digital shade management", The international journal of esthetic dentistry, 1. Januar 2017 (2017-01-01), Seiten 186-202, XP055562597, Germany Gefunden im Internet: URL:https://static1.squarespace.com/static /57ea3299e6f2e14e6db1f7d9/t/5afa925f562fa7 3ebfa26cfb/1526370915985/eLAB-EN.pdf [gefunden am 2019-02-27]
- WAN-SUN LEE ET AL: "The effect of powder A2/powder A3 mixing ratio on color and translucency parameters of dental porcelain", THE JOURNAL OF ADVANCED PROSTHODONTICS, Bd. 7, Nr. 5, 1. Januar 2015 (2015-01-01), Seite 400, XP055562724, ISSN: 2005-7806, DOI: 10.4047/jap.2015.7.5.400

## Beschreibung

Die vorliegende Erfindung betrifft ein Verfahren zum Ermitteln eines Mischungsrezepts für eine Dentalkeramik mit einer gewünschten Farbe.

In der Dentalmedizin ist es bei verschiedenen Anwendungen erforderlich, eine künstliche Restauration anzufertigen, welche möglichst exakt die gleiche Farbe wie natürliche Zähne aufweist. Im Falle einer Zahnkrone ist es beispielsweise entscheidend, dass die Farbe der Zahnkrone möglichst exakt der der verbleibenden Zähne des Patienten entspricht, damit es anderen Personen nicht auffällt, dass die Zahnkrone nicht ein natürlicher Zahn ist. Die diesbezüglichen Ansprüche der Patienten wachsen kontinuierlich an.

Eine Herstellung von künstlichen Dentalrestaurationen mit exakt der gleichen Farbe wie der der verbleibenden natürlichen Zähne des Patienten ist jedoch eine Herausforderung, die bis heute nicht zufriedenstellend gelöst ist. Ein Problem dabei ist zunächst einmal die exakte Bestimmung der Farbe der nachzuahmenden natürlichen Zähne des Patienten. Das am weitesten verbreitete Verfahren hierfür ist der visuelle Abgleich eines verbliebenen Zahns mit einer konfektionierten Zahnskala, wie beispielsweise der VITA-Classical-Farbskala, die von der Firma VITA Zahnfabrik H. Rauter GmbH & Co. KG entwickelt worden ist. Dieser visuelle Abgleich führt jedoch selten zu exakten Ergebnisse, da der visuelle Abgleich fehleranfällig ist. Häufige Quellen für solche Fehler sind beispielsweise der das Ergebnis verfälschende Einfluss variierender Lichtverhältnisse während der visuellen Bestimmung, die unzureichende farbliche Abdeckung aller natürlich vorkommender Zahnfarben auf der Farbskala, das Nichtvorhandensein von einheitlichen Farbstandards bei dentalen Farbskalen und etwaige Schwächen in der Sehkraft der Person, welche die visuelle Bestimmung vornimmt.

Es wurden daher in der Vergangenheit bereits mehrere Versuche unternommen, diese bekannten Defizite bei der klassischen Farbbestimmung zu überwinden, um so die Übereinstimmung zwischen der durch den natürlichen Zahn vorgegebenen Farbe und der tatsächlich an der Dentalrestauration erzielten Farbe zu erhöhen. Beispielsweise wurden zu diesem Zweck spezielle dentale Spektrophotometer eingeführt und auch neue, erweiterte Farbskalen, wie zum Beispiel die Handelsprodukte Vita 3D Master der Firma Vita Zahnfabrik H. Rauter GmbH & Co. KG in Bad Säckingen, Deutschland und Shofu Vintage Halo der Firma Shofu Dental GmbH in Ratingen, Deutschland. Allerdings hat keine dieser Maßnahmen zu einem den Patientenanforderungen vollständig genügenden Ergebnis geführt.

Ein weiteres gewichtiges Problem bei der Herstellung von Dentalrestaurationen mit einer exakt den Vorgaben entsprechenden Farbe, selbst wenn die Farbe der nachzuahmenden natürlichen Zähne des Patienten zumindest annähernd exakt bestimmt ist, ist es, die Dentalkeramik so zusammenzumischen, dass diese nach der Fertigstellung der Dentalrestauration exakt die vorgegebene Farbe aufweist. Auf dem Markt ist eine enorme Vielzahl von Ausgangsmaterialien für das Zusammenmischen von Dentalkeramiken verfügbar, von denen der Dentaltechniker die richtigen Ausgangsstoffe auswählen und in einem geeigneten Mischungsverhältnis miteinander vermischen muss. Oftmals besteht die Dentalkeramik aus einer Mischung von mehr als 6 verschiedenen Ausgangsmaterialien. Allerdings führen die von verschiedenen Herstellern mit demselben Farbcode vertriebenen Ausgangsstoffe oftmals in einer Dentalkeramik zu unterschiedlichen Farbergebnissen der damit hergestellten Dentalrestaurationen, selbst wenn die von den verschiedenen Herstellern mit demselben Farbcode vertriebenen Ausgangsmaterialien in jeweils gleicher Menge mit ansonsten den gleichen übrigen Bestandteilen vermischt werden. Es ist daher eine Herausforderung, für einen ganz speziellen vorgegebenen Farbton aus der Vielzahl der von verschiedenen Herstellern verfügbaren Ausgangsstoffen diejenigen in einem geeigneten Verhältnis miteinander zu vermischen, um in der fertigen Dentalrestauration exakt die vorgegebene Farbe zu erzielen, wobei diese Herausforderung selbst einem sehr erfahrenen Dentaltechniker sehr häufig nicht gelingt. Zudem ist das Ermitteln einer zur Erzielung der vorgegebenen Farbe geeigneten Mischung von kommerziell erhältlichen Ausgangsmaterialien sehr zeitintensiv.

In der US 6,030,209 wird ein Farbsystem für Porzellandentalrestaurationen beschrieben, in dem kolorimetrische Spektrometerdaten verwendet werden, die über einen nicht näher spezifizierten Algorithmus zu einem Rezept umgesetzt werden, wobei Porzellan und verschiedenfarbige Pulver eingesetzt werden. Der Algorihmus wird nicht näher spezifiziert.

In Hein, eLABor_aid, Seite 193, Abschnitt *"Shade Formulation"* wird allgemein ein statistisches Modell beschrieben, um Zielzahnfarbwerte in eine individuelle Dentinkeramikmischung zu konvertieren.

In der US 2007/0212667 A1 wird ein Einstellen einer gewünschten Dentalrestaurationsfarbe offenbart, indem zwei oder mehr verschiedenfarbige Keramikpulver in verschiedenen Verhältnissen miteinander vermischt werden, wobei die Mischungsrezepte durch eine nicht näher beschriebene Tabelle oder einen nicht näher beschriebenen Algorithmus erzeugt werden können sollen.

Ausgehend davon liegt der vorliegenden Erfindung die Aufgabe zugrunde, ein Verfahren zur Verfügung zu stellen, mit dem es einfach, schnell und zuverlässig möglich ist, ein Mischungsrezept zu ermitteln, welches es erlaubt, eine Dentalrestauration mit exakt der gewünschten Farbe herzustellen.

Erfindungsgemäß wird diese Ausgabe gelöst durch ein Verfahren zum Ermitteln eines Mischungsrezepts für eine Dentalkeramik mit einer gewünschten Farbe, welches die folgenden Schritte umfasst:
i) Vorgeben der Zielfarbe der Dentalkeramik
ii) Bereitstellen wenigstens einer Dentinkeramik,
iii) Bereitstellen von wenigstens drei verschiedenen Malfarben,
iv) Bereitstellen eines Algorithmus, der so ausgestaltet ist, dass dieser ein Mischungsrezept für eine Zusammensetzung berechnen kann, welche die wenigstens eine in dem Schritt ii) bereitgestellte Dentinkeramik und die in dem Schritt iii) bereitgestellten wenigstens drei Malfarben in solchen Mengen enthält, dass eine aus der Zusammensetzung hergestellte Dentalkeramik die in dem Schritt i) vorgegebene Zielfarbe aufweist, und
v) Ermitteln des Mischungsrezepts für die Dentalkeramik durch Durchführen des Algorithmus,
dadurch gekennzeichnet, dass in dem Schritt iii) eine rote Malfarbe bereitgestellt wird, welche nach Zusetzen zu der in dem Schritt ii) bereitgestellten wenigstens einen Dentinkeramik nur den L*-Wert und den a*-Wert, nicht aber den b*-Wert der wenigstens einen Dentinkeramik verändert und zwar den L*-Wert verringert und den a*-Wert erhöht, dass in dem Schritt iii) eine graue Malfarbe bereitgestellt wird, welche nach Zusetzen zu der in dem Schritt ii) bereitgestellten wenigstens einen Dentinkeramik nur den L*-Wert und den b*-Wert, nicht aber den a*-Wert der wenigstens einen Dentinkeramik verändert und zwar den L*-Wert verringert und den b*-Wert verringert, und, dass in dem Schritt iii) eine gelbe Malfarbe bereitgestellt wird, welche nach Zusetzen zu der in dem Schritt ii) bereitgestellten wenigstens einen Dentinkeramik nur den b*-Wert, nicht aber die L*- und a*-Werte der wenigstens einen Dentinkeramik verändert und zwar den b*-Wert erhöht.

Diese Lösung basiert auf der überraschenden Erkenntnis, dass es durch das Vorgeben von wenigstens einer Dentinkeramik und bevorzugt von genau einer Dentinkeramik und von wenigstens drei verschiedenen Malfarben und besonders bevorzugt von genau drei verschiedenen Malfarben möglich ist, einen Algorithmus zu ermitteln, der so ausgestaltet ist, dass dieser ein Mischungsrezept für eine Zusammensetzung berechnen kann, welche die wenigstens eine Dentinkeramik und die wenigstens drei Malfarben in solchen Mengen enthält, dass eine aus der Zusammensetzung hergestellte Dentalkeramik exakt die vorgegebene Zielfarbe aufweist. Insbesondere basiert die vorliegende Erfindung auf der überraschenden Erkenntnis, dass es zwischen verschiedenen Malfarben und Dentinkeramiken eine Korrelation gibt, die es erlaubt, ausgehend von gewählten Wunschausgangswerten - wie z.B. der L*-, a*- und b*-Werte - die exakt von den einzelnen Bestandteilen einzumischenden Mengen zu berechnen, um so zuverlässig eine Dentalkeramik zu erhalten, die im fertigen, gebrannten Zustand exakt die gewünschte Farbe aufweist. Mithin erlaubt es das erfindungsgemäße Verfahren, einfach, schnell und zuverlässig ein Mischungsrezept zu ermitteln, welches es erlaubt, eine Dentalrestauration mit exakt der gewünschten Farbe herzustellen.

Unter einer Dentalkeramik wird im Sinne der vorliegenden Patentanmeldung in Anlehnung an die EN ISO 6872:2008 ein anorganischer, nicht metallischer Werkstoff verstanden, welcher eine Zusammensetzung aufweist, so dass er, wenn er entsprechend der Gebrauchsanweisung des Herstellers verarbeitet wird, die Herstellung einer vollständigen oder teilweisen dentalen Restauration oder eines Zahnersatzes erlaubt.

Ferner wird im Rahmen der vorliegenden Patentanmeldung unter einer Dentinkeramik ein dentaler keramischer Werkstoff verstanden, der zum Ausbilden der Gesamtform sowie der Grundfarbe einer dentalen Restauration oder eines Zahnersatzes verwendet werden kann, damit es wie natürliches Dentin aussieht.

Zudem bezeichnet der Begriff Malfarbe im Sinne der vorliegenden Patentanmeldung ein dentales Keramikpulver oder eine Paste, das bzw. die intensiv gefärbt ist und so zusammengesetzt wird, dass es bzw. sie entweder innerhalb des Aufbaus oder außen an einer dentalen Restauration oder an einem Zahnersatz verwendet werden kann, damit die bei menschlichen Zähnen vorkommenden Details innerhalb oder auf der Oberfläche nachgebildet werden können.

Grundsätzlich ist die vorliegende Erfindung bezüglich des Formats der in dem Schritt i) vorzugebenen Zielfarbe der Dentalkeramik nicht beschränkt. Insbesondere kann die Zielfarbe als Werte jedes bekannten Farbraumes vorgegeben werden, wie beispielsweise, aber nicht beschränkt auf Werte des RGB-Farbraums, des CIELUV-Farbraums oder des CIELab-Farbraums (1976). Besonders gute Ergebnisse werden insbesondere erhalten, wenn hierfür der CIELab-Farbraum verwendet wird und somit die Zielfarbe in dem Schritt i) in Form der L*a*b*-Werte des vorgegeben wird. Bekanntermaßen beschreibt in dem CIELab-Farbraum der L*-Wert die Helligkeit der Farbe, wobei der L*-Wert zwischen 0 und 100 beträgt. Während ein L*-Wert von 0 schwarz entspricht, entspricht ein L*-Wert von 100 weiß. Zudem beschreibt der a*-Wert den Grün- oder Rotanteil einer Farbe, wobei negative Werte für Grün und positive Werte für Rot stehen. Hingegen beschreibt der b*-Wert den Blau- oder Gelbanteil einer Farbe, wobei negative Werte für Blau und positive Werte für Gelb stehen.

Im Rahmen der vorliegenden Erfindung wird für die Messung der L*-, a*- und b*-Werte bspw. einer Muster-/Eichserie ein Photo Research PR-670 Spektroradiometer mit einer Blende von 0,25 eingesetzt, wobei die Farbwerte mit einer von Molnaar et al., "Determination of Kubelka-Munk scattering and absorption coefficients by diffuse illumination", Applied Optics, 1999, Band 38, Seiten 2068bis 2077 beschriebenen Apparatur unter einem Messwinkel von 8° mit Normlicht D65 unter einem Beobachtungswinkel von 2° gemessen werden. Vorzugsweise wird dieselbe Muster-/Eichserie anschließend nochmals mit einer handelsüblichen digitalen Spiegelreflexkamera, wie z.B. einer Nikon D7000, unter einem Beobachtungswinkel von 90° mit einem Makroobjektiv von 85 mm mit einer Blende von f22 und einer Belichtungszeit von 1/125 Sekunden sowie einer ISO von 100 mit Hilfe eines handelsüblichen Ringblitzes, wie z.B. Sigma EM140DG, sowie eines Polfilters, vorzugsweise eines unter dem Handelsnamen "polar_eyes" von Emulation S. Hein erhältlichen Polfilters, unter Kreuzpolarisation vermessen, um die Korrektheit der erhalten Daten zu überprüfen.

Nachfolgend wird die vorliegende Erfindung insbesondere für den CIELab-Farbraum beschrieben. Alle anderen Farbräume können einfach entsprechend verwendet werden, indem die entsprechenden Zielfarben von dem anderen Farbraum zu dem CIELab-Farbraum umgerechnet, also beispielsweise die RGB-Farbwerte zu den L*a*b*-Werten umgerechnet werden und dann mithilfe der errechneten L*a*b*-Werte die nachfolgend im Detail beschriebenen Ausführungsformen durchgeführt werden.

Die Helligkeit bzw. der L*-Wert des mit dem erfindungsgemäßen Verfahren ermittelten Mischungsrezepts für die Dentalkeramik wird in erster Linie durch die Dentinkeramik eingestellt, wobei deren L*-Wert durch die zugemischten Malfarben verringert wird. Daher sollte die in dem Schritt ii) vorgegebene Dentinkeramik einen L*-Wert aufweisen, der höher als der des Ziel-L*-Wertes liegt.

Vorzugsweise wird in dem Schritt ii) eine Dentinkeramik vorgegeben, welche in Abhängigkeit von dem L*-Wert der Zielfarbe die folgenden Eigenschaften aufweist:
i) bei einem L*-Wert der Zielfarbe von 81 bis 83: einen L*-Wert von 82 bis 88, einen a*-Wert von -2 bis 2 und einen b*-Wert von -2 bis 2, bevorzugt einen L*-Wert von 83 bis 87, einen a*-Wert von -1,0 bis 1,5 und einen b*-Wert von -1,0 bis 1,5 und besonders bevorzugt einen L*-Wert von 84,5 bis 86,1, einen a*-Wert von -0,5 bis 1,0 und einen b*-Wert von 0,1 bis 1,1, mit der Maßgabe, dass der L*-Wert der Dentinkeramik größer ist als der L*-Wert der in dem Schritt i) vorgegebenen Zielfarbe,
ii) bei einem L*-Wert der Zielfarbe von 75 bis kleiner 81: einen L*-Wert von 81 bis 87, einen a*-Wert von -2 bis 2 und einen b*-Wert von -2 bis 2, bevorzugt einen L*-Wert von 83 bis 86, einen a*-Wert von -1,0 bis 1,5 und einen b*-Wert von -1,0 bis 1,5 und besonders bevorzugt einen L*-Wert von 84,0 bis 85,4, einen a*-Wert von 0,1 bis 1,1 und einen b*-Wert von 0,2 bis 1,2,
iii) bei einem L*-Wert der Zielfarbe von 69 bis kleiner 75: einen L*-Wert von 76 bis 82, einen a*-Wert von 2,0 bis 4,5 und einen b*-Wert von 7 bis 12, bevorzugt einen L*-Wert von 77 bis 81, einen a*-Wert von 2,5 bis 4,0 und einen b*-Wert von 8 bis 11 und besonders bevorzugt einen L*-Wert von 78,5 bis 79,9, einen a*-Wert von 2,7 bis 3,9 und einen b*-Wert von 8,8 bis 10,2 sowie
iv) bei einem L*-Wert der Zielfarbe von 58 bis kleiner 69: einen L*-Wert von 66 bis 72, einen a*-Wert von 2 bis 6 und einen b*-Wert von 20 bis 24, bevorzugt einen L*-Wert von 67 bis 71, einen a*-Wert von 3 bis 5 und einen b*-Wert von 21 bis 23 und besonders bevorzugt einen L*-Wert von 68,5 bis 70,1, einen a*-Wert von 3,5 bis 4,3 und einen b*-Wert von 21,2 bis 22,2.

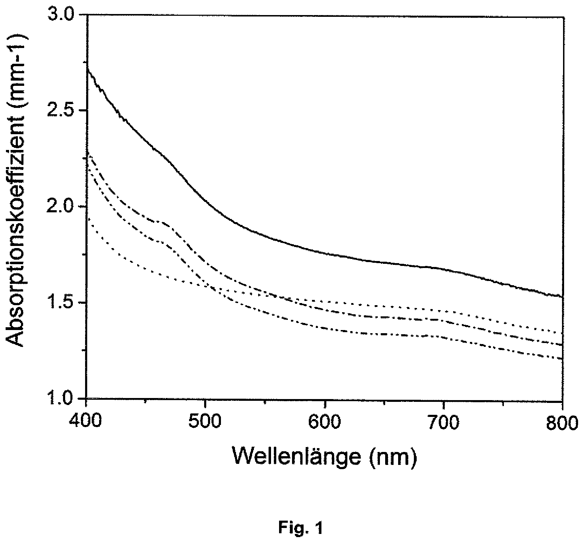

In Weiterbildung des Erfindungsgedankens wird es vorgeschlagen, dass in dem Schritt ii) eine Dentinkeramik vorgegeben wird, welche in dem sichtbaren Spektralbereich von 400 bis 800 nm eine nahezu konstante Absorption aufweist, wobei vorzugsweise der Absorptionskoeffizient bei jeder Wellenlänge zwischen 500 und 800 nm um maximal 30%, besonders bevorzugt um maximal 20% und ganz besonders bevorzugt um maximal 10% von dem Mittelwert des in dem Wellenlängenbereich zwischen 500 und 800 nm ermittelten Absorptionskoeffizienten abweicht. Beispiele für Absorptionsspektren von vier geeigneten Dentinkeramiken sind in der Fig. 1 wiedergegeben.

Gemäß der vorliegenden Erfindung wird in dem Schritt iii) als eine von den wenigstens drei Malfarben eine rote Malfarbe bereitgestellt, wobei die rote Malfarbe derart ist, dass diese nach dem Zusetzen zu der in dem Schritt ii) bereitgestellten wenigstens einen Dentinkeramik nur den L*-Wert und den a*-Wert, nicht aber den b*-Wert der wenigstens einen Dentinkeramik verändert. Dabei verringert die rote Malfarbe nach dem Zusetzen zu der wenigstens einen Dentinkeramik den L*-Wert der wenigstens einen Dentinkeramik und erhöht den a*-Wert der wenigstens einen Dentinkeramik, wohingegen, wie dargelegt, der b*-Wert der wenigstens einen Dentinkeramik nicht verändert wird. Im Rahmen der vorliegenden Erfindung wird unter Veränderung des L*-, a*- oder b*-Wertes durch Zusetzen einer Malfarbe zu einer Dentinkeramik verstanden, dass der Zusatz von 1 Gew.-% der Malfarbe zu der Dentinkeramik den L*-, a*- oder b*-Wert der Mischung im Vergleich zu dem der Dentinkeramik um wenigstens +/- 1 verändert. Andernfalls wird die Malfarbe als den L*-, a*- oder b*-Wert der wenigstens einen Dentinkeramik nicht verändert bezeichnet. Vorzugsweise ändert der Zusatz von 1 Gew.-% einer einen L*-Wert oder a*-Wert oder b*-Wert nicht-veränderten Malfarbe den entsprechenden Wert um weniger als +/- 0,5 und besonders bevorzugt um weniger als +/- 0,1.

Vorzugsweise weist die in dem Schritt iii) bereitgestellte rote Malfarbe einen L*-Wert von 38 bis 46, einen a*-Wert von 29 bis 37 sowie einen b*-Wert von 5 bis 10, weiter bevorzugt einen L*-Wert von 40 bis 44, einen a*-Wert von 31 bis 35 sowie einen b*-Wert von 6 bis 9, besonders bevorzugt einen L*-Wert von 41 bis 43, einen a*-Wert von 32 bis 34 sowie einen b*-Wert von 7 bis 8,5 und ganz besonders bevorzugt einen L*-Wert von 42,0 bis 42,6, einen a*-Wert von 32,4 bis 33,3 sowie einen b*-Wert von 7,5 bis 8,0 auf.

Eine besonders geeignete rote Malfarbe weist beispielsweise einen L*-Wert von 42,33, einen a*-Wert von 32,87 und einen b*-Wert von 7,75 auf.

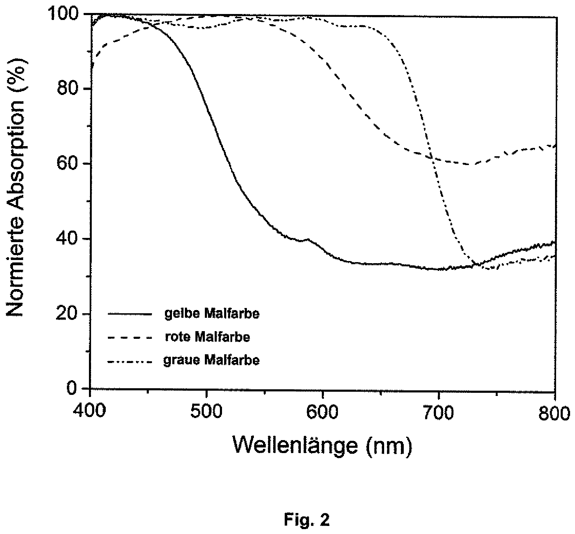

Ferner ist es bevorzugt, dass die in dem Schritt iii) bereitgestellte rote Malfarbe in dem sichtbaren Spektralbereich von 400 bis 800 nm ein Absorptionsmaximum zwischen 400 und 650 nm und bevorzugt zwischen 500 und 550 nm aufweist. Dabei beträgt die Absorption bei allen Wellenlängen zwischen 450 und 550 nm mindestens 90% der Absorption des Absorptionsmaximums und beträgt die Absorption bei allen Wellenlängen zwischen 650 und 800 nm maximal 75% der Absorption des Absorptionsmaximums. Die Absorption wird dabei mit einem UV-VIS Spektrometer Cary 4000 der Firma Varian Medical Systems, Inc. mit einem Öffnungswinkel von 0,5° gemessen. Dazu wird die Reflexion bestimmt, indem Licht in einem 45° Winkel auf die Probenvorderseite eingestrahlt und die rückreflektierte Strahlung auf der Vorderseite (135°) detektiert wird. Die Absorption wird dann aus der Reflexion berechnet und auf den Maximalwert normiert. Ein Beispiel für das Absorptionsspektrum einer geeigneten roten Malfarbe ist in der Fig. 2 wiedergegeben.

Gemäß der vorliegenden Erfindung wird in dem Schritt iii) zusätzlich zu der zuvor beschriebenen roten Malfarbe als zweite Malfarbe eine graue Malfarbe bereitgestellt, wobei die graue Malfarbe nach deren Zusetzen zu der in dem Schritt ii) bereitgestellten wenigstens einen Dentinkeramik nur den L*-Wert und den b*-Wert der wenigstens einen Dentinkeramik, nicht aber den a*-Wert der wenigstens einen Dentinkeramik verändert. Dabei verringern sich durch das Zusetzen der grauen Malfarbe der L*-Wert sowie der b*-Wert der wenigstens einen Dentinkeramik, nicht aber der a*-Wert.

Gute Ergebnisse werden insbesondere erhalten, wenn in dem Schritt iii) eine graue Malfarbe bereitgestellt wird, welche einen L*-Wert von 34 bis 42, einen a*-Wert von -2 bis 4 sowie einen b*-Wert von -5 bis 1, weiter bevorzugt einen L*-Wert von 36 bis 40, einen a*-Wert von -1 bis 3 sowie einen b*-Wert von -3 bis 0, besonders bevorzugt einen L*-Wert von 37 bis 39, einen a*-Wert von 0 bis 2 sowie einen b*-Wert von -2,5 bis -0,5 und ganz besonders bevorzugt einen L*-Wert von 37,3 bis 38,4, einen a*-Wert von 0,8 bis 1,4 sowie einen b*-Wert von -1,9 bis -1,4 aufweist.

Eine besonders geeignete graue Malfarbe weist beispielsweise einen L*-Wert von 37,77, einen a*-Wert von 1,07 und einen b*-Wert von -1,65 auf.

Ferner ist es bevorzugt, dass die in dem Schritt iii) bereitgestellte graue Malfarbe in dem sichtbaren Spektralbereich von 400 bis 800 nm ein oder mehrere Absorptionsmaxima zwischen 450 und 650 nm aufweist. Dabei beträgt die Absorption bei allen Wellenlängen zwischen 450 und 650 nm mindestens 90% der Absorption des bzw. der Absorptionsmaxima und beträgt die Absorption bei allen Wellenlängen zwischen 700 und 800 nm maximal 60% der Absorption des bzw. der Absorptionsmaxima. Ein Beispiel für das Absorptionsspektrum einer geeigneten gelben Malfarbe ist in der Fig. 2 wiedergegeben.

Zudem ist es gemäß der vorliegenden Erfindung vorgesehen, in dem Schritt iii) zusätzlich zu zusätzlich zu der zuvor beschriebenen roten Malfarbe und zu der zuvor beschriebenen grauen Malfarbe als dritte Malfarbe eine gelbe Malfarbe bereitzustellen, wobei die gelbe Malfarbe nach deren Zusetzen zu der in dem Schritt ii) bereitgestellten wenigstens einen Dentinkeramik nur den b*-Wert der wenigstens einen Dentinkeramik, nicht aber die L*- und a*-Werte der wenigstens einen Dentinkeramik verändert. Dabei erhöht sich durch das Zusetzen der gelben Malfarbe der b*-Wert der wenigstens einen Dentinkeramik.

Gute Ergebnisse werden insbesondere erhalten, wenn in dem Schritt iii) eine gelbe Malfarbe bereitgestellt wird, welche einen L*-Wert von 80 bis 88, einen a*-Wert von -2 bis 4 sowie einen b*-Wert von 63 bis 72, weiter bevorzugt einen L*-Wert von 82 bis 86, einen a*-Wert von 0 bis 3 sowie einen b*-Wert von 65 bis 70, besonders bevorzugt einen L*-Wert von 83 bis 85, einen a*-Wert von 0,5 bis 2,5 sowie einen b*-Wert von 66 bis 69 und ganz besonders bevorzugt einen L*-Wert von 83,5,0 bis 84,5, einen a*-Wert von 1,1 bis 1,7 sowie einen b*-Wert von 67,1 bis 68,1 aufweist.

Eine besonders geeignete gelbe Malfarbe weist beispielsweise einen L*-Wert von 84,05, einen a*-Wert von 1,44 und einen b*-Wert von 67,60 auf.

Ferner ist es bevorzugt, dass die in dem Schritt iii) bereitgestellte gelbe Malfarbe in dem sichtbaren Spektralbereich von 400 bis 800 nm ein Absorptionsmaximum zwischen 400 und 500 nm und bevorzugt zwischen 400 und 450 nm aufweist. Dabei ist die Absorption bei dem Absorptionsmaximum bevorzugt mindestens 2 mal so hoch wie die Absorption bei jeder Wellenlänge zwischen 550 und 800 nm. Ein Beispiel für das Absorptionsspektrum einer geeigneten gelben Malfarbe ist in der Fig. 2 wiedergegeben.

In Weiterbildung des Erfindungsgedankens wird es vorgeschlagen, den in dem Schritt iv) bereitgestellten Algorithmus durch folgende Schritte zu ermitteln:
a) Anfertigen einer Eichreihe, welche die in dem Schritt ii) bereitgestellte Dentinkeramik und mindestens drei und bevorzugt mindestens fünf Mischungen aus der in dem Schritt ii) bereitgestellten Dentinkeramik und jeweils zunehmenden Mengen der in dem Schritt iii) bereitgestellten roten Malfarbe enthält,
b) Anfertigen einer Eichreihe, welche die in dem Schritt ii) bereitgestellte Dentinkeramik und mindestens drei und bevorzugt mindestens fünf Mischungen aus der in dem Schritt ii) bereitgestellten Dentinkeramik und jeweils zunehmenden Mengen der in dem Schritt iii) bereitgestellten grauen Malfarbe enthält,
c) Anfertigen einer Eichreihe, welche die in dem Schritt ii) bereitgestellte Dentinkeramik und mindestens drei und bevorzugt mindestens fünf Mischungen aus der in dem Schritt ii) bereitgestellten Dentinkeramik und jeweils zunehmenden Mengen der in dem Schritt iii) bereitgestellten gelben Malfarbe enthält,
d) Anfertigen von Testkronen und/oder Probescheiben aus der Dentinkeramik sowie aus jeder Mischung der in den Schritten a) bis c) angefertigten Eichreihen,
e) Bestimmen der L*-, a*- und b*-Werte für jede der in dem Schritt d) angefertigten Testkronen und/oder Probescheiben,
f) Auswerten der in dem Schritt e) bestimmen L*-, a*- und b*-Werte für jede der in dem Schritt d) angefertigten Testkronen und/oder Probescheiben für jede der in den Schritten a) bis c) angefertigten Eichreihen.

Beispielsweise können die in den Schritten a) bis c) beschriebenen Eichreihen angefertigt werden, indem jeweils 560 mg der vorgegebenen Dentinkeramik 0 mg, 3,75 mg, 7,50 mg, 11,25 mg und 15,00 mg der roten Malfarbe für die Eichreihe a), 0 mg, 3,75 mg, 7,50 mg, 11,25 mg und 15,00 mg der grauen Malfarbe für die Eichreihe b) sowie 0 mg, 3,75 mg, 7,50 mg, 11,25 mg und 15,00 mg der gelben Malfarbe für die Eichreihe c) zugesetzt werden und die so hergestellten Mischungen jeweils homogen vermischt werden.

Danach wird aus den einzelnen Mischungen in dem Schritt d) jeweils eine Testkrone und/oder eine Probescheibe hergestellt. Vorzugsweise besteht die Testkrone lediglich aus einer Gerüst-Kappe, die aus handelsüblichen Produkten z.B. auf der Basis von Zirkoniumdioxid oder Lithiumdisilikat mit einer genormten Dicke von 0,4 mm hergestellt ist und anschließend mit einer Schicht von Dentinkeramik manuell verblendet wird. Nach dem Brennen in einem Keramikofen wird die gebrannte Dentinkeramik auf eine genormte Dicke von 1,0 mm reduziert und dann optisch vermessen. Zur Herstellung einer Probescheibe wird eine keramische Mischung in einen Sample-Maker übertragen, der auf eine Tiefe/Dicke von 3.0 mm eingestellt ist. Danach wird die Keramik an der Luft getrocknet, bis sie aus dem Sample-Maker entnommen werden kann. Während des Brandvorgangs tritt eine Volumenschrumpfung von etwa 20% bis 25% auf. Die so hergestellte Probe wird anschließend in einem Probenschleifer der Firma Buehler, Lake Buff, Illinois, USA, Model Ecomet/Automet beidseitig auf eine Dicke von 1.0 mm automatisiert runtergeschliffen und poliert.

Anschließend wird jede der Testkronen auf einem standardisierten Testmodel mit einem zahnfarbenen Kunststoff-Stumpf vermessen bzw. jede der Probescheiben auf anderen scheibenförmigen Proben mit einer Kontaktflüssigkeit mit einem höheren Brechungsindex als der von der keramischen Probe mit einem Brechungsindex von größer als 1,50 vermessen. Dann werden in dem Schritt e) für jede der Testkronen bzw. jede der Probescheiben mit einer Spiegelreflexkamera wie von Hein et al., "eLABor_aid: Ein neues Konzept für die Zahnfarbbestimmung" in The International Journal of Esthetic Dentistry, 2017, Nummer 2, Seiten 200 bis 216 beschrieben, Digitalbilder aufgenommen und verarbeitet, um deren L*-, a*- und b*-Werte zu bestimmen.

Durch Auswerten der für die drei Eichreihen erhaltenen Werte kann dann ein geeigneter Algorithmus erstellt werden. Dabei wird das Auswerten in dem Schritt f) des erfindungsgemäßen Verfahrens vorzugsweise wie folgt durchgeführt:
f₁ₐ) Auftragen der ansteigenden Menge der in den Mischungen der in dem Schritt a) angefertigten Eichreihe enthaltenen ersten, bevorzugt roten Malfarbe in mg entlang der Abszisse und des für jede Mischung im Vergleich zu der Dentinkeramik erhaltenen Anstiegs des a*-Wertes entlang der Ordinate eines zweidimensionalen Koordinatensystems sowie Ermitteln einer Kurve für die aufgetragenen Daten mit der Methode der kleinsten Fehlerquadrate, mit der Methode der linearen Regression, mit der Methode der nichtlinear-quadratischen Regression, mit der Methode der nichtlinear-kubischen Regression oder mit der Methode der nichtlinear-polynomen Regression, wobei die ermittelte Kurve die Abhängigkeit des durch den Zusatz der in dem Schritt iii) bereitgestellten ersten, bevorzugt roten Malfarbe zu der Dentinkeramik erzielten a*-Wertes von der Menge der zugesetzten ersten Malfarbe zeigt,
f_{1b}) Auftragen der ansteigenden Menge der in den Mischungen der in dem Schritt a) angefertigten Eichreihe enthaltenen ersten, bevorzugt roten Malfarbe in mg entlang der Ordinate und der für jede Mischung im Vergleich zu der Dentinkeramik erhaltenen Verringerung des L*-Wertes entlang der Abszisse eines zweidimensionalen Koordinatensystems sowie Ermitteln einer Kurve für die aufgetragenen Daten mit der Methode der kleinsten Fehlerquadrate, mit der Methode der linearen Regression, mit der Methode der nichtlinear-quadratischen Regression, mit der Methode der nichtlinear-kubischen Regression oder mit der Methode der nichtlinear-polynomen Regression, wobei die ermittelte Kurve die Abhängigkeit der Verringerung des L*-Wertes durch den Zusatz der in dem Schritt iii) bereitgestellten ersten, bevorzugt roten Malfarbe zu der Dentinkeramik von der Menge der zugesetzten ersten Malfarbe zeigt,
f₂ₐ) Auftragen der ansteigenden Menge der in den Mischungen der in dem Schritt b) angefertigten Eichreihe enthaltenen zweiten, bevorzugt grauen Malfarbe in mg entlang der Abszisse und der für jede Mischung im Vergleich zu der Dentinkeramik erhaltenen Verringerung des L*-Wertes entlang der Ordinate eines zweidimensionalen Koordinatensystems sowie Ermitteln einer Kurve für die aufgetragenen Daten mit der Methode der kleinsten Fehlerquadrate, mit der Methode der linearen Regression, mit der Methode der nichtlinear-quadratischen Regression, mit der Methode der nichtlinear-kubischen Regression oder mit der Methode der nichtlinear-polynomen Regression, wobei die ermittelte Kurve die Abhängigkeit der Verringerung des L*-Wertes durch den Zusatz der in dem Schritt iii) bereitgestellten zweiten, bevorzugt grauen Malfarbe zu der Dentinkeramik von der Menge der zugesetzten zweiten Malfarbe zeigt,
f_{2b}) Auftragen der ansteigenden Menge der in den Mischungen der in dem Schritt b) angefertigten Eichreihe zweiten, bevorzugt grauen Malfarbe in mg entlang der Ordinate und der für jede Mischung im Vergleich zu der Dentinkeramik erhaltenen Verringerung des b*-Wertes entlang der Abszisse eines zweidimensionalen Koordinatensystems sowie Ermitteln einer Kurve für die aufgetragenen Daten mit der Methode der kleinsten Fehlerquadrate, mit der Methode der linearen Regression, mit der Methode der nichtlinear-quadratischen Regression, mit der Methode der nichtlinear-kubischen Regression oder mit der Methode der nichtlinear-polynomen Regression, wobei die ermittelte Kurve die Abhängigkeit der Verringerung des b*-Wertes durch den Zusatz der in dem Schritt iii) bereitgestellten zweiten, bevorzugt grauen Malfarbe zu der Dentinkeramik von der Menge der zugesetzten zweiten Malfarbe zeigt, und
f₃) Auftragen der ansteigenden Menge der in den Mischungen der in dem Schritt c) angefertigten Eichreihe enthaltenen dritten, bevorzugt gelben Malfarbe in mg entlang der Abszisse und des für jede Mischung im Vergleich zu der Dentinkeramik erhaltenen Anstiegs des b*-Wertes entlang der Ordinate eines zweidimensionalen Koordinatensystems sowie Ermitteln einer Kurve für die aufgetragenen Daten mit der Methode der kleinsten Fehlerquadrate, mit der Methode der linearen Regression, mit der Methode der nichtlinear-quadratischen Regression, mit der Methode der nichtlinear-kubischen Regression oder mit der Methode der nichtlinear-polynomen Regression, wobei die ermittelte Kurve die Abhängigkeit des durch den Zusatz der in dem Schritt iii) bereitgestellten dritten, bevorzugt gelben Malfarbe zu der Dentinkeramik erzielten b*-Wertes von der Menge der zugesetzten dritten Malfarbe zeigt.

Durch Anwenden des so erhaltenen Algorithmus kann die Ermittlung der Mischungsrezepts in dem Schritt v) des erfindungsgemäßen Verfahrens beispielsweise wie folgt durchgeführt werden:
vₐ) Berechnen der zum Erreichen des Ziel-a*-Wertes erforderlichen Menge an erster, bevorzugt roter Malfarbe mit der in dem Schritt f₁ₐ) erhaltenen Kurve,
v_{b}) Berechnen der Verringerung des L*-Wertes der in dem Schritt ii) bereitgestellten Dentinkeramik durch den Zusatz der in dem Schritt va) berechneten Menge an erster, bevorzugt roter Malfarbe mit der in dem Schritt f_{1b}) erhaltenen Kurve, um so einen korrigierten L*-Wert zu erhalten,
v_{c}) Berechnen der erforderlichen Menge an zweiter, bevorzugt grauer Malfarbe mit der in dem Schritt f₂ₐ) erhaltenen Kurve, welche erforderlich ist, um den in dem Schritt vb) ermittelten korrigierten L*-Wert auf den des Ziel-L*-Wert zu verringern,
v_{d}) Berechnen der Verringerung des b*-Wertes der Mischung aus in dem Schritt ii) bereitgestellten Dentinkeramik und der in dem Schritt va) berechneten Mengen an erster, bevorzugt roter Malfarbe durch den Zusatz der in dem Schritt vc) berechneten Menge an zweiter, bevorzugt grauer Malfarbe mit der in dem Schritt f_{2b}) erhaltenen Kurve, um so einen korrigierten b*-Wert zu erhalten sowie
vₐ) Berechnen der erforderlichen Menge an dritter, bevorzugt gelber Malfarbe mit der in dem Schritt f₃) erhaltenen Kurve, um den in dem Schritt vd) ermittelten korrigierten b*-Wert zu erreichen.

Beispielsweise können die Werte für eine Gesamtmischung enthaltend 600 mg Dentinkeramik berechnet werden.

Ein weiterer Gegenstand der vorliegenden Offenbarung ist ein Algorithmus zum Ermitteln eines Mischungsrezepts für eine Dentalkeramik mit einer gewünschten Farbe erhältlich durch ein Verfahren umfassend die folgenden Schritte:
i) Vorgeben wenigstens einer Dentinkeramik,
ii) Vorgeben von wenigstens drei verschiedenen Malfarben,
iii) Anfertigen von jeweils einer Eichreihe für jede der in dem Schritt ii) vorgegebenen Malfarben, wobei jede Eichreihe die in dem Schritt ii) bereitgestellte Dentinkeramik und mindestens drei und bevorzugt mindestens fünf Mischungen aus der in dem Schritt ii) bereitgestellten Dentinkeramik und jeweils zunehmenden Mengen der entsprechenden Malfarbe enthält,
iv) Anfertigen von Testkronen und/oder Probescheiben aus der Dentinkeramik sowie aus jeder Mischung der in dem Schritt iii) angefertigten Eichreihen,
v) Bestimmen der L*-, a*- und b*-Werte für jede der in dem Schritt iv) angefertigten Testkronen und/oder Probescheiben,
vi) Auswerten der in dem Schritt v) bestimmen L*-, a*- und b*-Werte für jede der in dem Schritt iv) angefertigten Testkronen und/oder Probescheiben für jede der in dem Schritt iii) angefertigten Eichreihen.

Die vorstehend in Bezug auf das Verfahren zum Ermitteln eines Mischungsrezepts für eine Dentalkeramik mit einer gewünschten Farbe beschriebenen Ausführungsformen gelten insbesondere auch für den Algorithmus zum Ermitteln eines Mischungsrezepts für eine Dentalkeramik mit einer gewünschten Farbe sowie für das Verfahren zum Ermitteln des Algorithmus. Insbesondere ist es hierfür bevorzugt, eine Dentinkeramik und drei Malfarben, nämlich eine rote Malfarbe, eine graue Malfarbe sowie eine gelbe Malfarbe mit den vorstehend beschriebenen Eigenschaften einzusetzen.

Zudem ist auch ein Kit offenbart, welches umfasst:
- einen zuvor beschriebenen Algorithmus,
- eine Gebrauchsanweisung, wobei die Gebrauchsanweisung Angaben zu wenigstens einer Dentinkeramik und zu wenigstens drei verschiedenen Malfarben umfasst, sowie Angaben enthält, wie der Algorithmus anzuwenden ist, und
- ggf. ein bis vier Portionierer zum präzisen Abfüllen der benötigten Mengen an Dentinkeramik und den wenigstens drei Malfarben.

Die Portionierer sind vorzugsweise so ausgestaltet, dass sie eine Kalotte umfassen, welche das einfache und präzise Abfüllen von geeigneten Portionsgrößen der Bestandteile der Dentalkeramik erlauben. Beispielsweise kann das Kit drei Portionierer enthalten, und zwar einen Portionierer für die Dentinkeramik mit einer Kalotte mit einem Füllvolumen von 300 mg und zwei Portionierern zum Abfüllen der Malfarben mit Kalotten mit einem Füllvolumen von 0,75 mg und 3,75 mg. Alle Portionierer weisen an ihrem der Kalotte gegenüberliegenden Ende vorzugsweise einen Knopf, der über einen Stift mit der Kalotte verbunden ist, so dass durch Drücken des Knopfes der Inhalt der Kalotte freigesetzt werden kann.

In den Figuren zeigen:
- Fig. 1: die Absorptionsspektren von vier für die vorliegende Erfindung geeigneten Dentinkeramiken zwischen 400 und 800 nm und
- Fig. 2: die Absorptionsspektren von drei für die vorliegende Erfindung geeigneten Malfarben zwischen 400 und 800 nm.

Nachfolgend wird ein Beispiel erläutert.

### Beispiel 1

In dem Schritt i) wird folgende Zielfarbe für die Dentalkeramik vorgegeben: L*-Wert: 65, a*-Wert: 6 und b*-Wert: 23,294.

In den Schritten ii) und iii) werden folgende Dentinkeramik und Malfarben vorgegeben:
Dentinkeramik: L*-Wert: 69,3, a*-Wert: 3,9 und b*-Wert: 22; Handelsprodukt IPS e.max ceram Dentin D4 der Firma Ivoclar Vivadent.

Rote Malfarbe: L*-Wert: 42,33, a*-Wert: 32,87 und b*-Wert: 7,75; Handelsprodukt IPS Ivocolor E21 der Firma Ivoclar Vivadent.

Graue Malfarbe: L*-Wert: 37,77, a*-Wert: 1,07 und b*-Wert: -1,65; Handelsprodukt IPS Ivocolor E17 der Firma Ivoclar Vivadent.

Gelb Malfarbe: L*-Wert: 84,05, a*-Wert: 1,44 und b*-Wert: 67,60; Handelsprodukt IPS Ivocolor E22 der Firma Ivoclar Vivadent.

In den Schritten a) bis c) wurden folgende Eichreihen angefertigt:
Eichreihe rote Malfarbe: Jeweils 560 mg Dentinkeramik plus 0 mg, 3,75 mg, 7,50 mg, 11,25 mg und 15,00 mg der roten Malfarbe.

Eichreihe graue Malfarbe: Jeweils 560 mg Dentinkeramik plus 0 mg, 3,75 mg, 7,50 mg, 11,25 mg und 15,00 mg der grauen Malfarbe.

Eichreihe gelbe Malfarbe: Jeweils 560 mg Dentinkeramik plus 0 mg, 3,75 mg, 7,50 mg, 11,25 mg, 15,00 mg, 18,75 mg, 22,5 mg und 26,25 mg der gelben Malfarbe.

Dann wurde in dem Schritt d) von jeder vor Mischungen der Eichreihen eine Probescheibe hergestellt, indem zunächst mit Hilfe einer elektronischen Messwaage vom Typ Sartorius Quintix Secura immer 560 mg Dentinkeramik mit entsprechenden ansteigenden Mengen von Malfarbe angereichert wurde. Anschließend wurden die Dentinkeramik und Malfarbe mit destilliertem Wasser manuell mit Hilfe eines Zirkonspatel und in einer Abdampfschale sorgfältig vermischt. Für jede der so hergestellten Probescheiben wurden mit einer Spiegelreflexkamera wie von Hein et al., "eLABor_aid: Ein neues Konzept für die Zahnfarbbestimmung" in The International Journal of Esthetic Dentistry, 2017, Nummer 2, Seiten 200 bis 216 beschrieben, Digitalbilder aufgenommen und verarbeitet, um deren L*-, a*- und b*-Werte zu bestimmen.

Anschließend wurde der Algorithmus wie folgt ermittelt:
Schritt f₁ₐ): Auftragen der Mengen 0 mg, 3,75 mg, 7,50 mg, 11,25 mg und 15,00 mg entlang der Abszisse und des für die Probescheiben jeder Mischung der für die rote Malfarbe angefertigten Eichreihe erhaltenen Anstiegs des a*-Wertes entlang der Ordinate eines zweidimensionalen Koordinatensystems sowie Ermitteln einer Kurve für die aufgetragenen Daten mit der Methode der kleinsten Fehlerquadrate. Die ermittelte Kurve für die Abhängigkeit des durch den Zusatz der in dem Schritt iii) bereitgestellten roten Malfarbe zu der Dentinkeramik erzielten a*-Wertes von der Menge der zugesetzten ersten Malfarbe wird wiedergegeben durch die folgende Formel:
   Menge roter Farbe (in Einheiten a 0,75 mg) =AUFRUNDEN((-6,0769)+1,2726*Ziel-a*-Wert+ 0,074973* (Ziel-a*-Wert)^2). Das Symbol ^2 steht für "hoch 2" in Bezug auf den davor stehenden Klammerausdruck. (6)^2 ist demnach "6 hoch 2" gleich 6 mal 6 gleich 36.
Schritt f_{1b}): Auftragen der Mengen 0 mg, 3,75 mg, 7,50 mg, 11,25 mg und 15,00 mg entlang der Ordinate und der für die Probescheiben jeder Mischung der für die rote Malfarbe angefertigten Eichreihe im Vergleich zu der Dentinkeramik erhaltenen Verringerung des L*-Wertes entlang der Abszisse eines zweidimensionalen Koordinatensystems sowie Ermitteln einer Kurve für die aufgetragenen Daten mit der Methode der kleinsten Fehlerquadrate. Die ermittelte Kurve für die Abhängigkeit der Verringerung des L*-Wertes durch den Zusatz der in dem Schritt iii) bereitgestellten roten Malfarbe zu der Dentinkeramik von der Menge der zugesetzten ersten Malfarbe wird wiedergegeben durch die folgende Formel: Verringerung L*-Wert der Dentinkeramik= 0,011429+ 0,22543*Menge rote Malfarbe (in Einheiten a 0,75 mg)) + 0,0014286*(Menge rote Malfarbe (in Einheiten a 0,75 mg))^2.
Schritt f₂ₐ): Auftragen der Mengen 0 mg, 3,75 mg, 7,50 mg, 11,25 mg und 15,00 mg entlang der Abszisse und der für die Probescheiben jeder Mischung der für die graue Malfarbe angefertigten Eichreihe im Vergleich zu der Dentinkeramik erhaltenen Verringerung des L*-Wertes entlang der Ordinate eines zweidimensionalen Koordinatensystems sowie Ermitteln einer Kurve für die aufgetragenen Daten mit der Methode der kleinsten Fehlerquadrate. Die ermittelte Kurve für die Abhängigkeit der Verringerung des L*-Wertes durch den Zusatz der in dem Schritt iii) bereitgestellten grauen Malfarbe zu der Dentinkeramik von der Menge der zugesetzten grauen Malfarbe bzw. die Abhängigkeit der erforderlichen Menge an grauer Malfarbe zur Erzielung einer bestimmten Verringerung des L*-Wertes wird wiedergegeben durch die folgende Formel:
   Menge grauer Farbe (in Einheiten a 0,75 mg) = ABRUNDEN((-0,044753)+ 2,0221* durch die graue Malfarbe zu erzielende Verringerung des L*-Wertes+0,039683*(durch die graue Malfarbe zu erzielende Verringerung des L*-Wertes)^2)
Schritt f_{2b}): Auftragen der Mengen 0 mg, 3,75 mg, 7,50 mg, 11,25 mg und 15,00 mg entlang der Ordinate und der für die Probescheiben jeder Mischung der für die graue Malfarbe angefertigten Eichreihe im Vergleich zu der Dentinkeramik erhaltenen Verringerung des b*-Wertes entlang der Abszisse eines zweidimensionalen Koordinatensystems sowie Ermitteln einer Kurve für die aufgetragenen Daten mit der Methode der kleinsten Fehlerquadrate. Die ermittelte Kurve für die Abhängigkeit der Verringerung des b*-Wertes durch den Zusatz der in dem Schritt iii) bereitgestellten grauen Malfarbe zu der Dentinkeramik von der Menge der zugesetzten zweiten Malfarbe wird wiedergegeben durch die folgende Formel: Verringerung b*-Wert der Dentinkeramik=0,001+0,3862*(Menge graue Malfarbe (in Einheiten a 0,75 mg) +(-0,0066)* Menge graue Malfarbe (in Einheiten a 0,75 mg))^2.
Schritt f₃): Auftragen der Mengen 0 mg, 3,75 mg, 7,50 mg, 11,25 mg, 15,00 mg, 18,75 mg, 22,5 mg und 26,25 mg entlang der Abszisse und des für die Probescheiben jeder Mischung der für die gelbe Malfarbe angefertigten Eichreihe im Vergleich zu der Dentinkeramik erhaltenen Anstiegs des b*-Wertes entlang der Ordinate eines zweidimensionalen Koordinatensystems sowie Ermitteln einer Kurve für die aufgetragenen Daten mit der Methode der kleinsten Fehlerquadrate. Die ermittelte Kurve für die Abhängigkeit des durch den Zusatz der in dem Schritt iii) bereitgestellten gelben Malfarbe zu der Dentinkeramik erzielten Anstiegs des b*-Wertes von der Menge der zugesetzten gelben Malfarbe wird wiedergegeben durch die folgende Formel:
   Menge gelber Farbe (in Einheiten a 0,75 mg) =AUFRUNDEN((-0,0086069)+2,4378* durch die gelbe Malfarbe zu erzielende Erhöhung des b*-Wertes +0,021468*(durch die gelbe Malfarbe zu erzielende Erhöhung des b*-Wertes)^2).

Daraus wurde das Mischungsrezept für die Dentalkeramik mit der gewünschten Farbe wie folgt ermittelt:
Formel aus Schritt f₁ₐ): Menge roter Farbe (in Einheiten a 0,75 mg) =AUFRUNDEN((-6,0769)+1,2726*6+0,074973*(6^)2) = 5 Einheiten a 0,75 mg = 3,75 mg.
Formel aus Schritt f_{1b}): Verringerung L*-Wert der Dentinkeramik= 0,011429+ 0,22543*5 + 0,0014286*(5)^2= 1,2.

Daraus folgt: L*-Wert Dentinkeramik von 69,3 wird durch die 5 Einheiten a 0,75 mg rote Malfarbe um 1,2 verringert auf einen korrigierten L*-Wert von 68,1. Durch den Zusatz der grauen Farbe soll dieser korrigierte L*-Wert von 68,1 auf den Ziel-L*-Wert von 65 verringert werden, also um 3,1.

Formel aus Schritt f₂ₐ): Menge grauer Farbe (in Einheiten a 0,75 mg) = ABRUNDEN((-0,044753)+ 2,0221* 3,1+0,039683*(3,1)^2) = 6 Einheiten a 0,75 mg = 4,5 mg.

Formel aus Schritt f₂ₐ): Verringerung b*-Wert der Dentinkeramik=0,001+0,3862* 6 +(-0,0066)*(6)^2= 2,08.

Daraus folgt: b*-Wert Dentinkeramik von 22 wird durch die 6 Einheiten a 0,75 mg grauer Malfarbe um 2,08 verringert auf einen korrigierten b*-Wert von 19,92.

Durch den Zusatz der grauen Farbe soll dieser korrigierte L*-Wert von 19,92 auf den Ziel-b*-Wert von 23,294 erhöht werden, also um 3,374.

Formel aus Schritt f₃): Menge gelber Farbe (in Einheiten a 0,75 mg) =AUFRUNDEN((-0,0086069)+2,4378*3,374 +0,021468*(3,374)^2)= 9 Einheiten a 0,75 mg = 6,75 mg.

Nach alledem ergibt sich folgendes Mischungsrezept zur Herstellung der Dentalkeramik wird den gewünschten Werten: L*-Wert: 65, a*-Wert: 6 und b*-Wert: 23,294:
600 mg Dentinkeramik,
5 Einheiten a 0,75 mg, gleich 3,75 mg rote Malfarbe,
6 Einheiten a 0,75 mg, gleich 4,5 mg graue Malfarbe und
9 Einheiten a 0,75 mg, gleich 6,75 mg gelbe Malfarbe.

## Patentansprüche

1. Verfahren zum Ermitteln eines Mischungsrezepts für eine Dentalkeramik mit einer gewünschten Farbe, welches die folgenden Schritte umfasst:
i) Vorgeben der Zielfarbe der Dentalkeramik,
ii) Bereitstellen wenigstens einer Dentinkeramik,
iii) Bereitstellen von wenigstens drei verschiedenen Malfarben,
iv) Bereitstellen eines Algorithmus, der so ausgestaltet ist, dass dieser ein Mischungsrezept für eine Zusammensetzung berechnen kann, welche die wenigstens eine in dem Schritt ii) bereitgestellte Dentinkeramik und die in dem Schritt iii) bereitgestellten wenigstens drei Malfarben in solchen Mengen enthält, dass eine aus der Zusammensetzung hergestellte Dentalkeramik die in dem Schritt a) vorgegebene Zielfarbe aufweist, und
v) Ermitteln des Mischungsrezepts für die Dentalkeramik durch Durchführen des Algorithmus,
**dadurch gekennzeichnet, dass** in dem Schritt iii) eine rote Malfarbe bereitgestellt wird, welche nach Zusetzen zu der in dem Schritt ii) bereitgestellten wenigstens einen Dentinkeramik nur den L*-Wert und den a*-Wert, nicht aber den b*-Wert der wenigstens einen Dentinkeramik verändert und zwar den L*-Wert verringert und den a*-Wert erhöht, dass in dem Schritt iii) eine graue Malfarbe bereitgestellt wird, welche nach Zusetzen zu der in dem Schritt ii) bereitgestellten wenigstens einen Dentinkeramik nur den L*-Wert und den b*-Wert, nicht aber den a*-Wert der wenigstens einen Dentinkeramik verändert und zwar den L*-Wert verringert und den b*-Wert verringert, und, dass in dem Schritt iii) eine gelbe Malfarbe bereitgestellt wird, welche nach Zusetzen zu der in dem Schritt ii) bereitgestellten wenigstens einen Dentinkeramik nur den b*-Wert, nicht aber die L*- und a*-Werte der wenigstens einen Dentinkeramik verändert und zwar den b*-Wert erhöht.

2. Verfahren nach Anspruch 1, **dadurch gekennzeichnet, dass** die Zielfarbe in dem Schritt i) als Werte eines Farbraums vorgegeben wird, wobei der Farbraum vorzugsweise der RGB-Farbraum, der CIELUV-Farbraum oder der CIELab-Farbraum ist.

3. Verfahren nach Anspruch 2, **dadurch gekennzeichnet, dass** die Zielfarbe in dem Schritt i) in Form der L*a*b*-Werte des CIELab-Farbraums gemäß Definition von 1976 vorgegeben wird.

4. Verfahren nach Anspruch 3, **dadurch gekennzeichnet, dass** in dem Schritt ii) eine Dentinkeramik vorgegeben wird, welche in Abhängigkeit von dem L*-Wert der Zielfarbe folgende Eigenschaften aufweist:
i) bei einem L*-Wert der Zielfarbe von 81 bis 83: einen L*-Wert von 82 bis 88, einen a*-Wert von -2 bis 2 und einen b*-Wert von -2 bis 2, und bevorzugt einen L*-Wert von 84,5 bis 86,1, einen a*-Wert von - 0,5 bis 1,0 und einen b*-Wert von 0,1 bis 1,1,
ii) bei einem L*-Wert der Zielfarbe von 75 bis kleiner 81: einen L*-Wert von 81 bis 87, einen a*-Wert von -2 bis 2 und einen b*-Wert von -2 bis 2, und bevorzugt einen L*-Wert von 84,0 bis 85,4, einen a*-Wert von 0,1 bis 1,1 und einen b*-Wert von 0,2 bis 1,2,
iii) bei einem L*-Wert der Zielfarbe von 69 bis kleiner 75: einen L*-Wert von 76 bis 82, einen a*-Wert von 2,0 bis 4,5 und einen b*-Wert von 7 bis 12, und bevorzugt einen L*-Wert von 78,5 bis 79,9, einen a*-Wert von 2,7 bis 3,9 und einen b*-Wert von 8,8 bis 10,2 sowie
iv) bei einem L*-Wert der Zielfarbe von 58 bis kleiner 69: einen L*-Wert von 66 bis 72, einen a*-Wert von 2 bis 6 und einen b*-Wert von 20 bis 24, und bevorzugt einen L*-Wert von 68,5 bis 70,1, einen a*-Wert von 3,5 bis 4,3 und einen b*-Wert von 21,2 bis 22,2.

5. Verfahren nach zumindest einem der vorstehenden Ansprüche, **dadurch gekennzeichnet, dass** in dem Schritt iii) eine rote Malfarbe bereitgestellt wird, welche einen L*-Wert von 38 bis 46, einen a*-Wert von 29 bis 37 sowie einen b*-Wert von 5 bis 10, bevorzugt einen L*-Wert von 40 bis 44, einen a*-Wert von 31 bis 35 sowie einen b*-Wert von 6 bis 9, besonders bevorzugt einen L*-Wert von 41 bis 43, einen a*-Wert von 32 bis 34 sowie einen b*-Wert von 7 bis 8,5 und ganz besonders bevorzugt einen L*-Wert von 42,0 bis 42,6, einen a*-Wert von 32,4 bis 33,3 sowie einen b*-Wert von 7,5 bis 8,0 aufweist.

6. Verfahren nach zumindest einem der vorstehenden Ansprüche, **dadurch gekennzeichnet, dass** in dem Schritt iii) eine graue Malfarbe bereitgestellt wird, welche einen L*-Wert von 34 bis 42, einen a*-Wert von -2 bis 4 sowie einen b*-Wert von -5 bis 1, bevorzugt einen L*-Wert von 36 bis 40, einen a*-Wert von -1 bis 3 sowie einen b*-Wert von -3 bis 0, besonders bevorzugt einen L*-Wert von 37 bis 39, einen a*-Wert von 0 bis 2 sowie einen b*-Wert von -2,5 bis -0,5 und ganz besonders bevorzugt einen L*-Wert von 37,3 bis 38,4, einen a*-Wert von 0,8 bis 1,4 sowie einen b*-Wert von -1,9 bis -1,4 aufweist.

7. Verfahren nach zumindest einem der vorstehenden Ansprüche, **dadurch gekennzeichnet, dass** in dem Schritt iii) eine gelbe Malfarbe vorgegeben wird, welche einen L*-Wert von 80 bis 88, einen a*-Wert von -2 bis 4 sowie einen b*-Wert von 63 bis 72, bevorzugt einen L*-Wert von 82 bis 86, einen a*-Wert von 0 bis 3 sowie einen b*-Wert von 65 bis 70, besonders bevorzugt einen L*-Wert von 83 bis 85, einen a*-Wert von 0,5 bis 2,5 sowie einen b*-Wert von 66 bis 69 und ganz besonders bevorzugt einen L*-Wert von 83,5,0 bis 84,5, einen a*-Wert von 1,1 bis 1,7 sowie einen b*-Wert von 67,1 bis 68,1 aufweist.

8. Verfahren nach zumindest einem der vorstehenden Ansprüche, **dadurch gekennzeichnet, dass** der in dem Schritt iv) bereitgestellte Algorithmus durch folgende Schritte ermittelt wird:
a) Anfertigen einer Eichreihe, welche die in dem Schritt ii) bereitgestellte Dentinkeramik und mindestens drei und bevorzugt mindestens fünf Mischungen aus der in dem Schritt ii) bereitgestellten Dentinkeramik und jeweils zunehmenden Mengen der in dem Schritt iii) bereitgestellten roten Malfarbe enthält,
b) Anfertigen einer Eichreihe, welche die in dem Schritt ii) bereitgestellte Dentinkeramik und mindestens drei und bevorzugt mindestens fünf Mischungen aus der in dem Schritt ii) bereitgestellten Dentinkeramik und jeweils zunehmenden Mengen der in dem Schritt iii) bereitgestellten grauen Malfarbe enthält,
c) Anfertigen einer Eichreihe, welche die in dem Schritt ii) bereitgestellte Dentinkeramik und mindestens drei und bevorzugt mindestens fünf Mischungen aus der in dem Schritt ii) bereitgestellten Dentinkeramik und jeweils zunehmenden Mengen der in dem Schritt iii) bereitgestellten gelben Malfarbe enthält,
d) Anfertigen von Testkronen und/oder Probescheiben aus der Dentinkeramik sowie aus jeder Mischung der in den Schritten a) bis c) angefertigten Eichreihen,
e) Bestimmen der L*-, a*- und b*-Werte für jede der in dem Schritt d) angefertigten Testkronen und/oder Probescheiben,
f) Auswerten der in dem Schritt e) bestimmten L*-, a*- und b*-Werte für jede der in dem Schritt d) angefertigten Testkronen und/oder Probescheiben für jede der in den Schritten a) bis c) angefertigten Eichreihen.

9. Verfahren nach Anspruch 8, **dadurch gekennzeichnet, dass** das Auswerten in dem Schritt f) wie folgt durchgeführt wird:
f₁ₐ) Auftragen der ansteigenden Menge der in den Mischungen der in dem Schritt a) angefertigten Eichreihe enthaltenen roten Malfarbe in mg entlang der Abszisse und des für jede Mischung im Vergleich zu der Dentinkeramik erhaltenen Anstiegs des a*-Wertes entlang der Ordinate eines zweidimensionalen Koordinatensystems sowie Ermitteln einer Kurve für die aufgetragenen Daten mit der Methode der kleinsten Fehlerquadrate, mit der Methode der linearen Regression, mit der Methode der nichtlinear-quadratischen Regression, mit der Methode der nichtlinear-kubischen Regression oder mit der Methode der nichtlinear-polynomen Regression, wobei die ermittelte Kurve die Abhängigkeit des durch den Zusatz der in dem Schritt iii) bereitgestellten roten Malfarbe zu der Dentinkeramik erzielten a*-Wertes von der Menge der zugesetzten roten Malfarbe zeigt,
f_{1b}) Auftragen der ansteigenden Menge der in den Mischungen der in dem Schritt a) angefertigten Eichreihe enthaltenen roten Malfarbe in mg entlang der Ordinate und der für jede Mischung im Vergleich zu der Dentinkeramik erhaltenen Verringerung des L*-Wertes entlang der Abszisse eines zweidimensionalen Koordinatensystems sowie Ermitteln einer Kurve für die aufgetragenen Daten mit der Methode der kleinsten Fehlerquadrate, mit der Methode der linearen Regression, mit der Methode der nichtlinear-quadratischen Regression, mit der Methode der nichtlinear-kubischen Regression oder mit der Methode der nichtlinear-polynomen Regression, wobei die ermittelte Kurve die Abhängigkeit der Verringerung des L*-Wertes durch den Zusatz der in dem Schritt iii) bereitgestellten roten Malfarbe zu der Dentinkeramik von der Menge der zugesetzten roten Malfarbe zeigt,
f₂ₐ) Auftragen der ansteigenden Menge der in den Mischungen der in dem Schritt b) angefertigten Eichreihe enthaltenen grauen Malfarbe in mg entlang der Abszisse und der für jede Mischung im Vergleich zu der Dentinkeramik erhaltenen Verringerung des L*-Wertes entlang der Ordinate eines zweidimensionalen Koordinatensystems sowie Ermitteln einer Kurve für die aufgetragenen Daten mit der Methode der kleinsten Fehlerquadrate, mit der Methode der linearen Regression, mit der Methode der nichtlinear-quadratischen Regression, mit der Methode der nichtlinear-kubischen Regression oder mit der Methode der nichtlinear-polynomen Regression, wobei die ermittelte Kurve die Abhängigkeit der Verringerung des L*-Wertes durch den Zusatz der in dem Schritt iii) bereitgestellten grauen Malfarbe zu der Dentinkeramik von der Menge der zugesetzten grauen Malfarbe zeigt,
f_{2b}) Auftragen der ansteigenden Menge der in den Mischungen der in dem Schritt b) angefertigten Eichreihe grauen Malfarbe in mg entlang der Ordinate und der für jede Mischung im Vergleich zu der Dentinkeramik erhaltenen Verringerung des b*-Wertes entlang der Abszisse eines zweidimensionalen Koordinatensystems sowie Ermitteln einer Kurve für die aufgetragenen Daten mit der Methode der kleinsten Fehlerquadrate, mit der Methode der linearen Regression, mit der Methode der nichtlinear-quadratischen Regression, mit der Methode der nichtlinear-kubischen Regression oder mit der Methode der nichtlinear-polynomen Regression, wobei die ermittelte Kurve die Abhängigkeit der Verringerung des b*-Wertes durch den Zusatz der in dem Schritt iii) bereitgestellten grauen Malfarbe zu der Dentinkeramik von der Menge der zugesetzten grauen Malfarbe zeigt, und
f₃) Auftragen der ansteigenden Menge der in den Mischungen der in dem Schritt c) angefertigten Eichreihe enthaltenen gelben Malfarbe in mg entlang der Abszisse und des für jede Mischung im Vergleich zu der Dentinkeramik erhaltenen Anstiegs des b*-Wertes entlang der Ordinate eines zweidimensionalen Koordinatensystems sowie Ermitteln einer Kurve für die aufgetragenen Daten mit der Methode der kleinsten Fehlerquadrate, mit der Methode der linearen Regression, mit der Methode der nichtlinear-quadratischen Regression, mit der Methode der nichtlinear-kubischen Regression oder mit der Methode der nichtlinear-polynomen Regression, wobei die ermittelte Kurve die Abhängigkeit des durch den Zusatz der in dem Schritt iii) bereitgestellten gelben Malfarbe zu der Dentinkeramik erzielten b*-Wertes von der Menge der zugesetzten gelben Malfarbe zeigt.

10. Verfahren nach Anspruch 9, **dadurch gekennzeichnet, dass** die Ermittlung der Mischungsrezepts in dem Schritt v) wie folgt durchgeführt wird:
vₐ) Berechnen der zum Erreichen des Ziel-a*-Wertes erforderlichen Menge an roter Malfarbe mit der in dem Schritt f₁ₐ) erhaltenen Kurve,
v_{b}) Berechnen der Verringerung des L*-Wertes der in dem Schritt ii) bereitgestellten Dentinkeramik durch den Zusatz der in dem Schritt va) berechneten Menge an roter Malfarbe mit der in dem Schritt f_{1b}) erhaltenen Kurve, um so einen korrigierten L*-Wert zu erhalten,
v_{c}) Berechnen der erforderlichen Menge an grauer Malfarbe mit der in dem Schritt f₂ₐ) erhaltenen Kurve, welche erforderlich ist, um den in dem Schritt vb) ermittelten korrigierten L*-Wert auf den des Ziel-L*-Wert zu verringern,
v_{d}) Berechnen der Verringerung des b*-Wertes der Mischung aus in dem Schritt ii) bereitgestellten Dentinkeramik und der in dem Schritt va) berechneten Mengen an roter Malfarbe durch den Zusatz der in dem Schritt vc) berechneten Menge an grauer Malfarbe mit der in dem Schritt f_{2b}) erhaltenen Kurve, um so einen korrigierten b*-Wert zu erhalten sowie
vₐ) Berechnen der erforderlichen Menge an gelber Malfarbe mit der in dem Schritt f₃) erhaltenen Kurve, um den in dem Schritt vd) ermittelten korrigierten b*-Wert zu erreichen.

## Claims

1. A method for determining a mixing recipe for a dental ceramic with a desired color, comprising the following steps:
i) specifying the target color of the dental ceramic
ii) providing at least one dentin ceramic,
iii) providing at least three different stains,
iv) providing an algorithm that is designed in such a way that it can calculate a mixing recipe for a composition which contains the at least one dentin ceramic provided in step ii) and the at least three stains provided in step iii) in such quantities that a dental ceramic produced from the composition has the target color specified in step i), and
v) determining the mixing recipe for the dental ceramic by performing the algorithm,
**characterized in that** in step iii) a red stain is provided which, after addition to the at least one dentin ceramic provided in step ii), changes only the L* value and the a* value but not the b* value of the at least one dentin ceramic, specifically reduces the L* value and increases the a* value, **in that** in step iii) a gray stain is provided which, after addition to the at least one dentin ceramic provided in step ii), changes only the L* value and the b* value but not the a* value of the at least one dentin ceramic, specifically reduces the L* value and reduces the b* value, and **in that** in step iii) a yellow stain is provided which, after addition to the at least one dentin ceramic provided in step ii), changes only the b* value but not the L* and a* values of the at least one dentin ceramic, specifically increases the b* value.

2. The method according to claim 1, **characterized in that** the target color is specified in step i) as values of a color space, the color space preferably being the RGB color space, the CIELUV color space or the CIELab color space.

3. The method according to claim 2, **characterized in that** the target color in step i) is specified in the form of the L*a*b* values of the CIELab color space as defined in 1976.

4. The method according to claim 3, **characterized in that** in step ii) a dentin ceramic is specified which has the following properties depending on the L* value of the target color:
i) for a target color L* value of 81 to 83: an L* value of 82 to 88, an a* value of -2 to 2, and a b* value of -2 to 2, and preferably an L* value of 84.5 to 86.1, an a* value of -0.5 to 1.0 and a b* value of 0.1 to 1.1,
ii) for a target color L* value of 75 to less than 81: an L* value of 81 to 87, an a* value of -2 to 2, and a b* value of -2 to 2, and preferably an L* value of 84.0 to 85.4, an a* value of 0.1 to 1.1 and a b* value of 0.2 to 1.2,
iii) for a target color L* value of 69 to less than 75: an L* value of 76 to 82, an a* value of 2.0 to 4.5, and a b* value of 7 to 12, and preferably an L* value of 78.5 to 79.9, an a* value of 2.7 to 3.9 and a b* value of 8.8 to 10.2, and
iv) for a target color L* value of 58 to less than 69: an L* value of 66 to 72, an a* value of 2 to 6, and a b* value of 20 to 24, and preferably an L* value of 68.5 to 70.1, an a* value of 3.5 to 4.3 and a b* value of 21.2 to 22.2.

5. The method according to at least one of the preceding claims, **characterized in that** in step iii) a red stain is provided which has an L* value of 38 to 46, an a* value of 29 to 37 and a b* value of 5 to 10, preferably an L* value of 40 to 44, an a* value of 31 to 35 and a b* value of 6 to 9, particularly preferably an L* value of 41 to 43, an a* value of 32 to 34 and a b* value of 7 to 8.5 and very particularly preferably an L* value of 42.0 to 42.6, an a* value of 32.4 to 33.3 and has a b* value of 7.5 to 8.0.

6. The method according to at least one of the preceding claims, **characterized in that** in step iii) a gray stain is provided which has an L* value of 34 to 42, an a* value of -2 to 4 and a b* value of -5 to 1, preferably an L* value of 36 to 40, an a* value of -1 to 3 and a b* value of -3 to 0, particularly preferably an L* value of 37 to 39, an a* value of 0 to 2 and a b* value of -2.5 to -0.5 and very particularly preferably an L* value of 37.3 to 38.4, an a* value of 0.8 to 1.4 and has a b* value of -1.9 to -1.4.

7. The method according to at least one of the preceding claims, **characterized in that** in step iii) a yellow stain is specified which has an L* value of 80 to 88, an a* value of -2 to 4 and a b* value of 63 to 72, preferably an L* value of 82 to 86, an a* value of 0 to 3 and a b* value of 65 to 70, particularly preferably an L* value of 83 to 85, an a* value of 0.5 to 2.5 and a b* value of 66 to 69 and very particularly preferably an L* value of 83.5.0 to 84.5, an a* value of 1.1 to 1.7 and has a b* value of 67.1 to 68.1.

8. The method according to at least one of the preceding claims, **characterized in that** the algorithm provided in step iv) is determined by the following steps:
a) preparing a calibration series which contains the dentin ceramic provided in step ii) and at least three and preferably at least five mixtures of the dentin ceramic provided in step ii) and increasing amounts of the red stain provided in step iii),
b) preparing a calibration series which contains the dentin ceramic provided in step ii) and at least three and preferably at least five mixtures of the dentin ceramic provided in step ii) and increasing amounts of the gray stain provided in step iii),
c) preparing a calibration series which contains the dentin ceramic provided in step ii) and at least three and preferably at least five mixtures of the dentin ceramic provided in step ii) and increasing amounts of the yellow stain provided in step iii),
d) producing test crowns and/or sample disks from the dentin ceramic and from each mixture of the calibration series prepared in steps a) to c),
e) determining the L*, a* and b* values for each of the test crowns and/or sample disks prepared in step d),
f) evaluating the L*, a* and b* values determined in step e) for each of the test crowns and/or sample disks produced in step d) for each of the calibration series produced in steps a) to c).

9. The method according to claim 8, **characterized in that** the evaluation in step f) is carried out as follows:
f₁ₐ) plotting the increasing amount of red stain contained in the mixtures of the calibration series prepared in step a) in mg along the abscissa and the increase in the a* value obtained for each mixture compared to the dentin ceramic along the ordinate of a two-dimensional coordinate system and determining a curve for the data plotted using the least squares method, the linear regression method, the nonlinear quadratic regression method, the nonlinear cubic regression method or the nonlinear polynomial regression method, the curve obtained showing the dependence of the a* value achieved by adding the red stain provided in step iii) to the dentin ceramic on the amount of red stain added,
f_{1b}) plotting the increasing amount of red stain contained in the mixtures of the calibration series prepared in step a) in mg along the ordinate and the reduction in the L* value obtained for each mixture compared to the dentin ceramic along the abscissa of a two-dimensional coordinate system and determining a curve for the data plotted using the least squares method, the linear regression method, the nonlinear quadratic regression method, the nonlinear cubic regression method or the nonlinear polynomial regression method, the curve obtained showing the dependence of the reduction of the L* value by adding the red stain provided in step iii) to the dentin ceramic on the amount of red stain added,
f₂ₐ) plotting the increasing amount of gray stain contained in the mixtures of the calibration series prepared in step b) in mg along the abscissa and the reduction in the L* value obtained for each mixture compared to the dentin ceramic along the ordinate of a two-dimensional coordinate system and determining a curve for the data plotted using the least squares method, the linear regression method, the nonlinear quadratic regression method, the nonlinear cubic regression method or the nonlinear polynomial regression method, the curve obtained showing the dependence of the reduction of the L* value by adding the gray stain provided in step iii) to the dentin ceramic on the amount of gray stain added,
f_{2b}) plotting the increasing amount of gray stain in the mixtures of the calibration series prepared in step b) in mg along the ordinate and the reduction in the b* value obtained for each mixture compared to the dentin ceramic along the abscissa of a two-dimensional coordinate system and determining a curve for the data plotted using the least squares method, the linear regression method, the nonlinear quadratic regression method, the nonlinear cubic regression method or the nonlinear polynomial regression method, the curve obtained showing the dependence of the reduction of the b* value by adding the gray stain provided in step iii) to the dentin ceramic on the amount of gray stain added, and
f₃) plotting the increasing amount of yellow stain contained in the mixtures of the calibration series prepared in step c) in mg along the abscissa and the increase in the b* value obtained for each mixture compared to the dentin ceramic along the ordinate of a two-dimensional coordinate system and determining a curve for the data plotted using the least squares method, the linear regression method, the nonlinear quadratic regression method, the nonlinear cubic regression method or the nonlinear polynomial regression method, the curve obtained showing the dependence of the b* value achieved by adding the yellow stain provided in step iii) to the dentin ceramic on the amount of yellow stain added.

10. The method according to claim 9, **characterized in that** the determination of the mixing recipe in step v) is carried out as follows:
vₐ) calculating the amount of red stain required to achieve the target a* value using the curve obtained in step f₁ₐ),
v_{b}) calculating the reduction in the L* value of the dentin ceramic provided in step ii) by adding the amount of red stain calculated in step va) using the curve obtained in step f_{1b}), in order to thus obtain a corrected L* value,
v_{c}) calculating the required amount of gray stain using the curve obtained in step f₂ₐ) which is required to reduce the corrected L* value determined in step vb) to the target L* value,
v_{d}) calculating the reduction in the b* value of the mixture of dentin ceramic provided in step ii) and the amounts of red stain calculated in step va) by adding the amount of gray stain calculated in step vc) using the curve obtained in step f_{2b}), in order to obtain a corrected b* value, and
vₑ) calculating the required amount of yellow stain using the curve obtained in step f₃), in order to achieve the corrected b* value determined in step vd).

## Revendications

1. Procédé de détermination d'une recette de mélange pour une céramique dentaire présentant une couleur désirée, lequel comprend les étapes suivantes :
i) la spécification de la teinte cible de la céramique dentaire,
ii) la fourniture d'au moins une céramique dentinaire,
iii) la fourniture d'au moins trois maquillants différents,
iv) la fourniture d'un algorithme, lequel est conçu de telle sorte qu'il puisse calculer une recette de mélange pour une composition, laquelle contient au moins une céramique dentinaire fournie dans l'étape ii) et les au moins trois maquillants fournis dans l'étape iii) dans des quantités telles qu'une céramique dentaire fabriquée à partir de la composition présente
la couleur cible prédéterminée dans l'étape i), et
v) la détermination de la recette de mélange de la céramique dentaire par exécution de l'algorithme,
**caractérisé en ce qu'**un maquillant rouge est fourni dans l'étape iii), lequel, après l'ajout à l'au moins une céramique dentinaire fournie dans l'étape ii), ne modifie que la valeur L* et la valeur a*, mais pas la valeur b* de l'au moins une céramique dentinaire, et réduit notamment la valeur L* et augmente la valeur a*, qu'un maquillant gris est fourni dans l'étape iii), lequel, après l'ajout à l'au moins une céramique dentinaire fournie dans l'étape ii), ne modifie que la valeur L* et la valeur b*, mais pas la valeur a* de l'au moins une céramique dentinaire, et réduit notamment la valeur L* et réduit la valeur b*, et qu'un maquillant jaune est fourni dans l'étape iii), lequel, après l'ajout à l'au moins une céramique dentinaire fournie dans l'étape ii), ne modifie que la valeur b*, mais pas les valeurs L* et a* de l'au moins une céramique dentinaire, et augmente notamment la valeur b*.

2. Procédé selon la revendication 1, **caractérisé en ce que** la couleur cible est prédéterminée dans l'étape i) sous forme de valeurs d'un espace colorimétrique, dans lequel l'espace colorimétrique est, de préférence l'espace colorimétrique RVB, l'espace colorimétrique CIELUV ou l'espace colorimétrique CIELab.

3. Procédé selon la revendication 2, **caractérisé en ce que** la couleur cible dans l'étape i) est prédéterminée sous la forme des valeurs L*a*b* de l'espace colorimétrique CIELab tel que défini en 1976.

4. Procédé selon la revendication 3, **caractérisé en ce qu'**une céramique dentinaire est prédéterminée dans l'étape ii), laquelle présente, en fonction de la valeur L* de la couleur cible, les propriétés suivantes :
i) pour une valeur L* de la couleur cible de 81 à 83 : une valeur L* de 82 à 88, une valeur a* de -2 à 2, et une valeur b* de -2 à 2, et, de préférence une valeur L* de 84,5 à 86,1, une valeur a* de -0,5 à 1,0 et une valeur b* de 0,1 à 1,1,
ii) pour une valeur L* de la couleur cible de 75 à moins de 81 : une valeur L* de 81 à 87, une valeur a* de -2 à 2 et une valeur b* de -2 à 2, et, de préférence une valeur L* de 84,0 à 85,4, une valeur a* de 0,1 à 1,1 et une valeur b* de 0,2 à 1,2,
iii) pour une valeur L* de la couleur cible de 69 à moins de 75 : une valeur L* de 76 à 82, une valeur a* de 2,0 à 4,5 et une valeur b* de 7 à 12, et, de préférence une valeur L* de 78,5 à 79,9, une valeur a* de 2,7 à 3,9 et une valeur b* de 8,8 à 10,2, et
iv) pour une valeur L* de la couleur cible de 58 à moins de 69 : une valeur L* de 66 à 72, une valeur a* de 2 à 6 et une valeur b* de 20 à 24, et, de préférence une valeur L* de 68,5 à 70,1, une valeur a* de 3,5 à 4,3 et une valeur b* de 21,2 à 22,2.

5. Procédé selon au moins l'une quelconque des revendications précédentes, **caractérisé en ce qu'**un maquillant rouge est fourni dans l'étape iii), lequel présente une valeur L* de 38 à 46, une valeur a* de 29 à 37 et une valeur b* de 5 à 10, de préférence une valeur L* de 40 à 44, une valeur a* de 31 à 35 et une valeur b* de 6 à 9, de manière particulièrement préférée une valeur L* de 41 à 43, une valeur a* de 32 à 34 et une valeur b* de 7 à 8,5, et idéalement une valeur L* de 42,0 à 42,6, une valeur a* de 32,4 à 33,3 et une valeur b* de 7,5 à 8,0.

6. Procédé selon au moins l'une quelconque des revendications précédentes, **caractérisé en ce qu'**un maquillant gris est fourni dans l'étape iii), lequel présente une valeur L* de 34 à 42, une valeur a* de -2 à 4 et une valeur b* de -5 à 1, de préférence une valeur L* de 36 à 40, une valeur a* de -1 à 3 et une valeur b* de -3 à 0, de manière particulièrement préférée une valeur L* de 37 à 39, une valeur a* de 0 à 2 et une valeur b* de -2,5 à -0,5 et idéalement une valeur L* de 37,3 à 38,4, une valeur a* de 0,8 à 1,4 et une valeur b* de -1,9 à -1,4.

7. Procédé selon au moins l'une quelconque des revendications précédentes, **caractérisé en ce qu'**un maquillant jaune est prédéterminé dans l'étape iii), lequel présente une valeur L* de 80 à 88, une valeur a* de -2 à 4 et une valeur b* de 63 à 72, de préférence une valeur L* de 82 à 86, une valeur a* de 0 à 3 et une valeur b* de 65 à 70, de manière particulièrement préférée une valeur L* de 83 à 85, une valeur a* de 0,5 à 2,5 et une valeur b* de 66 à 69, et idéalement une valeur L* de 83,5,0 à 84,5, une valeur a* de 1,1 à 1,7 et une valeur b* de 67,1 à 68,1.

8. Procédé selon au moins l'une quelconque des revendications précédentes, **caractérisé en ce que** l'algorithme fourni dans l'étape iv) est déterminé selon les étapes suivantes :
a) la préparation d'une gamme d'étalonnage, laquelle contient la céramique dentinaire fournie dans l'étape ii) et au moins trois et, de préférence au moins cinq mélanges de la céramique dentinaire fournis dans l'étape ii) et des quantités respectivement croissantes du maquillant rouge fourni dans l'étape iii),
b) la préparation d'une gamme d'étalonnage, laquelle contient la céramique dentinaire fournie dans l'étape ii) et au moins trois et, de préférence au moins cinq mélanges de la céramique dentinaire fournis dans l'étape ii) et des quantités respectivement croissantes du maquillant gris fourni dans l'étape iii),
c) la préparation d'une gamme d'étalonnage, laquelle contient la céramique dentinaire fournie dans l'étape ii) et au moins trois et, de préférence au moins cinq mélanges de la céramique dentinaire fournis dans l'étape ii) et des quantités respectivement croissantes du maquillant jaune fourni dans l'étape iii),
d) la préparation de couronnes d'essai et/ou de disques d'essai à partir de la céramique dentinaire et de chaque mélange des gammes d'étalonnage préparées dans les étapes a) à c),
e) la détermination des valeurs L*, a* et b* pour chacune des couronnes d'essai et/ou chacun des disques d'essai préparés dans l'étape d),
f) l'évaluation des valeurs L*, a* et b* déterminées dans l'étape e) pour chacune des couronnes d'essai et/ou chacun des disques d'essai préparés dans l'étape d) pour chacune des gammes d'étalonnage préparées dans les étapes a) à c).

9. Procédé selon la revendication 8, **caractérisé en ce que** l'évaluation dans l'étape f) est mise en oeuvre comme suit :
f₁ₐ) l'application de la quantité croissante de maquillant rouge contenu dans les mélanges de la gamme d'étalonnage préparée dans l'étape a) en mg en abscisse et de l'augmentation de la valeur a* obtenue pour chaque mélange par rapport à la céramique dentinaire en ordonnée d'un système de coordonnées bidimensionnel, ainsi que la détermination d'une courbe pour les données appliquées selon la méthode des moindres carrés, la méthode de régression linéaire, la méthode de régression des carrés non linéaires, la méthode de régression cubique non linéaire ou la méthode de régression polynomiale non linéaire, dans lequel la courbe déterminée montre la dépendance de la valeur a* obtenue par ajout du maquillant rouge fourni dans l'étape iii) à la céramique dentinaire par rapport à la quantité de maquillant rouge ajouté,
f_{1b}) l'application de la quantité croissante de maquillant rouge contenu dans les mélanges de la gamme d'étalonnage préparée dans l'étape a) en mg en ordonnée et de la réduction de la valeur L* obtenue pour chaque mélange par rapport à la céramique dentinaire en abscisse d'un système de coordonnées bidimensionnel, ainsi que la détermination d'une courbe pour les données appliquées selon la méthode des moindres carrés, la méthode de régression linéaire, la méthode de régression des carrés non linéaires, la méthode de régression cubique non linéaire ou la méthode de régression polynomiale non linéaire, dans lequel la courbe déterminée montre la dépendance de la réduction de la valeur L* par ajout du maquillant rouge fourni dans l'étape iii) à la céramique dentinaire par rapport à de la quantité de maquillant rouge ajouté,
f₂ₐ) l'application de la quantité croissante de maquillant gris contenu dans les mélanges de la gamme d'étalonnage préparée dans l'étape b) en mg en abscisse et de la réduction de la valeur L* obtenue pour chaque mélange par rapport à la céramique dentinaire en ordonnée d'un système de coordonnées bidimensionnel, ainsi que la détermination d'une courbe pour les données appliquées selon la méthode des moindres carrés, la méthode de régression linéaire, la méthode de régression des carrés non linéaires, la méthode de régression cubique non linéaire ou la méthode de régression polynomiale non linéaire, dans lequel la courbe déterminée montre la dépendance de la réduction de la valeur L* par ajout du maquillant gris fourni dans l'étape iii) à la céramique dentinaire par rapport à de la quantité de maquillant gris ajouté,
f_{2b}) l'application de la quantité croissante de maquillant gris contenu dans les mélanges de la gamme d'étalonnage préparée dans l'étape b) en mg en ordonnée et de la réduction de la valeur b* obtenue pour chaque mélange par rapport à la céramique dentinaire en abscisse d'un système de coordonnées bidimensionnel, ainsi que la détermination d'une courbe pour les données appliquées selon la méthode des moindres carrés, la méthode de régression linéaire, la méthode de régression des carrés non linéaires, la méthode de régression cubique non linéaire ou la méthode de régression polynomiale non linéaire, dans lequel la courbe déterminée montre la dépendance de la réduction de la valeur b* par ajout du maquillant gris fourni dans l'étape iii) à la céramique dentinaire par rapport à de la quantité de maquillant gris ajouté, et
f₃) l'application de la quantité croissante de maquillant jaune contenu dans les mélanges de la gamme d'étalonnage préparée dans l'étape c) en mg en abscisse et de l'augmentation de la valeur b* obtenue pour chaque mélange par rapport à la céramique dentinaire en ordonnée d'un système de coordonnées bidimensionnel, ainsi que la détermination d'une courbe pour les données appliquées selon la méthode des moindres carrés, la méthode de régression linéaire, la méthode de régression des carrés non linéaires, la méthode de régression cubique non linéaire ou la méthode de régression polynomiale non linéaire, dans lequel la courbe déterminée montrant la dépendance de la valeur b* obtenue par ajout du maquillant jaune fourni dans l'étape iii) à la céramique dentinaire par rapport à de la quantité de maquillant jaune ajouté.

10. Procédé selon la revendication 9, **caractérisé en ce que** la détermination de la recette de mélange dans l'étape v) est mise en oeuvre comme suit :
vₐ) le calcul de la quantité de maquillant rouge nécessaire pour atteindre la valeur cible a* à l'aide de la courbe déterminée dans l'étape f₁ₐ),
v_{b}) le calcul de la diminution de la valeur L* de la céramique dentinaire fournie dans l'étape ii) par ajout de la quantité de maquillant rouge calculée dans l'étape vₐ) à l'aide de la courbe déterminée dans l'étape f_{1b}), de manière à obtenir une valeur L* corrigée,
v_{c}) le calcul de la quantité de maquillant gris nécessaire à l'aide de la courbe déterminée dans l'étape f₂ₐ), laquelle est nécessaire pour ramener la valeur L* corrigée déterminée dans l'étape v_{b}) à la valeur L* cible,
v_{d}) le calcul de la réduction de la valeur b* du mélange de céramique dentinaire fourni dans l'étape ii) et des quantités de maquillant rouge calculées dans l'étape vₐ) par ajout de la quantité de maquillant gris calculée dans l'étape v_{c}) à l'aide de la courbe déterminée dans l'étape f_{2b}), de manière à obtenir une valeur b* corrigée, ainsi que
vₑ) le calcul de la quantité de maquillant jaune nécessaire à l'aide de la courbe déterminée dans l'étape f₃) pour atteindre la valeur b* corrigée déterminée dans l'étape v_{d}).
